# EUROPÄISCHE PATENTANMELDUNG

(11) **EP 3 053 757 A1**
(43) Veröffentlichungstag der Anmeldung: **10.08.2016**
(21) Anmeldenummer: 15153671.1
(22) Anmeldetag: 03.02.2015
(51) Int. Cl.: B44C 5/04, B32B 38/00, B41M 5/52

(54) **Verfahren zur Herstellung eines Druckuntergrundes sowie eines direkt bedruckten Dekorpaneels**

(71) Anmelder: Surface Technologies GmbH & Co. KG, 15837 Baruth (DE)
(72) Erfinder: Buhlmann, Carsten, 15834 Rangsdorf (DE)
(74) Vertreter: Michalski Hüttermann & Partner Patentanwälte mbB

(57) **Zusammenfassung**

Die vorliegende Erfindung betrifft ein Verfahren zur Herstellung eines Druckuntergrundes (140) für den Direktdruck zum Herstellen eines Dekorpaneels (100), insbesondere eines direktbedruckten Dekorpaneels ohne Gegenzug. Darüber hinaus betrifft die vorliegende Erfindung ein Dekorpaneel (100), welches einen nach einem erfindungsgemäßen Verfahren hergestellten Druckuntergrund (140) aufweist. Mit dem erfindungsgemäßen Verfahren wird vorgeschlagen, dass zum Ausbilden des Druckuntergrunds (140) wenigstens eine Harzzusammensetzung mit einem Melaminharz aufgebracht wird, welche zunächst unter Einwirkung von Wärme getrocknet und anschließend mit UV-Strahlung behandelt wird. Der Druckuntergrund wird insbesondere aus zwei harzhaltige Lagen (141, 142) ausgestaltet, wobei die erste Lage (141) ein Gemisch aus Melaminharz und Harnstoffharz aufweist und die zweite Lage (142) im Harzanteil zu ≥ 95 Gew.% Melaminharz aufweist.

## Beschreibung

Die vorliegende Erfindung betrifft ein Verfahren zur Herstellung eines Druckuntergrundes für den Direktdruck zum Herstellen eines Dekorpaneels. Darüber hinaus betrifft die vorliegende Erfindung ein Dekorpaneel, welches einen nach einem erfindungsgemäßen Verfahren hergestellten Druckuntergrund aufweist. Insbesondere betriff die Anmeldung dabei ein Verfahren zur Herstellung eines direktbedruckten Dekorpaneels ohne Gegenzug sowie ein Dekorpaneel, welches nach einem erfindungsgemäßen Verfahren ohne Gegenzug hergestellten wurde.

Unter dem Begriff Dekorpaneel sind im Sinne der Erfindung Wand-, Decken-, Tür-, oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe sind Holzart wie z.B. Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Zur Vermeidung der Verformung der Dekorpaneele, dem sogenannten Schüsseln, durch Schrumpfungseffekte des aufgebrachten Dekorpapiers wird nachdem auf der dem Dekorpapier gegenüberliegenden Seite der Trägerplatte ein Gegenzugpapier aufgebracht und der erhaltene Schichtenaufbau unter Verwendung geeigneter druck- und/oder wärmeaktivierter Klebemittel fest miteinander verbunden. Die durch den Gegenzug auf die Trägerplatte einwirkenden Kräfte sollen dabei den das Schüsseln verursachenden Zugkräften entgegenwirken.

Das Aufbringen des Gegenzuges bedingt dabei einen weiteren Arbeitsschritt und damit einhergehend weitere Produktionskosten.

Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Oberflächenbeschichtung bzw. der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Im Sinne der Erfindung sind unter dem Begriff Faserwerkstoffe Materialien wie z.B. Papier und Vliese auf Basis pflanzlicher, tierische, mineralischer oder auch künstlicher Fasern zu verstehen, ebenso wie Pappen. Beispiele für Faserwerkstoffe aus pflanzlichen Fasern sind neben Papieren und Vliesen aus Zellstofffasern, Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind aus Mineralwolle oder Glaswolle.

Zum Schutz der aufgebrachten Dekorschicht sind in der Regeln Verschleiß- oder Deckschichten oberhalb der Dekorschicht aufgebracht. Eine Verschleiß- und/oder Deckschicht im Sinne der Erfindung ist eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen, wie beispielsweise Abrieb, schützt.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Ein Problem, welches beim direkten Bedrucken von Dekorpaneelen auftreten kann, ist, dass die zu bedruckende Oberfläche des Dekorpaneels keinen optimalen Druckuntergrund darstellt, auf welchen ein entsprechendes Dekor aufgebracht werden kann. Dies kann sowohl bei einem unmittelbaren Bedrucken des Trägers als auch bei dem Bedrucken eines auf den Träger aufgebrachten Faserwerkstoffs der Fall sein.

So kann beispielsweise während der Herstellung des Dekorpaneels, etwa bei einer Strukturierung der Deckschicht durch eine Presse, der Effekt auftreten, dass die Deckschicht nicht ausreichend an dem Untergrund haftet und somit die Oberfläche beschädigt wird.

Bei dem Bedrucken eines auf den Träger aufgebrachten Faserwerkstoffs kann ferner das Problem bestehen, dass ein als Druckuntergrund auf eine Trägerplatte eines Dekorpaneels aufgebrachte Papier- oder Vliesschicht durch das zur Aufbringung verwendete Harz derart penetriert wird, dass das zur Befestigung aufgetragene Harz auf der zur Bedruckung vorgesehenen Seite des Papiers oder Vlies durchschlägt und dort zu Haftungsproblemen der Druckfarbe führen kann. Zur Überwindung dieses Problems kann es vorgesehen sein, das Papier oder Vlies mit einer Sperrschicht zur versehen, die ein Durchschlagen des Harzes verhindert. Eine solche Sperrschicht führt jedoch vielfach dazu, dass die beim Druck aufgebrachte Tinte nicht oder nicht hinreichend auf das Papier oder Vlies aufzieht, sondern auf der Oberfläche stehenbleibt, was sich nachteilig auf die Qualität des Druckes auswirkt. Desweiteren kann es vorgesehen sein, dass das Papier oder Vlies vor dem Aufbringen auf die Trägerplatte auf der zu bedruckenden Seite mit einer Farbaufnahmeschicht versehen wird, auf welche dann gedruckt wird. Das so hergestellte Dekorpapier wird dann auf die Trägerplatte aufgebracht. Bei der anschließenden Aufbringung einer Deck- oder Verschleißschicht kann es jedoch zu Haftungsproblemen kommen, so dass der letztendliche Laminatverbund keine ausreichende Stabilität aufweist und es z.B. zur Aufspaltung des Laminats in der Dekorpapierschicht kommt.

Dies berücksichtigend ist es die Aufgabe der vorliegenden Erfindung, ein Verfahren zur Herstellung eines Druckuntergrundes zum Direktdruck auf einem Dekorpaneel anzugeben, welches wenigstens ein aus dem Stand der Technik bekanntes Problem zu überwinden vermag. Darüber hinaus ist es die Aufgabe der Erfindung, ein Dekorpaneel mit einem entsprechenden Druckuntergrund anzugeben.

Gelöst wir diese Aufgabe durch ein Verfahren gemäß Anspruch 1 sowie ein direkt bedrucktes Dekorpaneel gemäß Anspruch 14. Bevorzugte Ausgestaltungen der Erfindung sich in den abhängigen Ansprüchen sowie der weiteren Beschreibung gegeben, wobei die weiteren beschriebenen Merkmale einzeln oder in einer beliebigen Kombination ein Bestandteil der Erfindung sein können, insoweit sich aus dem Kontext nicht explizit das Gegenteil ergibt.

Erfindungsgemäß wird somit ein Verfahren zur Herstellung eines Druckuntergrundes für den Direktdruck zum Herstellen eines Dekorpaneels vorgeschlagen, aufweisend die Verfahrensschritte:
a) Bereitstellen eines plattenförmigen Trägers;
b) Gegebenenfalls Aufbringen einer Harzschicht auf den plattenförmigen Träger;
c) Gegebenenfalls Aufbringen einer Papier- oder Vliesschicht auf den plattenförmigen Träger; und
d) Gegebenenfalls Kalandrieren des entstandenen Schichtenaufbaus, insbesondere bei einer Temperatur zwischen ≥ 40° und ≤ 250°C,
wobei das Verfahren dadurch gekennzeichnet ist, dass
das Verfahren die weiteren Verfahrensschritte aufweist:
e) Aufbringen wenigstens einer Harzzusammensetzung mit einem Melaminharz;
f) Trocknen der in Verfahrens schritt e) aufgebrachten Harzzusammensetzung unter Einwirkung von Wärme; und
g) Anschließendes Behandeln der in Verfahrensschritt e) aufgebrachten und in Verfahrens schritt f) getrockneten Harzzusammensetzung mit UV-Strahlung.

In überraschender Weise hat sich gezeigt, dass durch das vorbeschriebene Verfahren ein Druckuntergrund für den Direktdruck erzeugbar ist, der ein hervorragendes Druckbild erlaubt und dabei weitere verfahrenstechnische Vorteile mit sich bringt.

So hat sich in überraschender Weise gezeigt, dass insbesondere die Behandlung der getrockneten melaminharzhaltigen Harzschicht durch UV-Strahlung ein verbessertes Druckbild erzeugen kann. Somit können durch das vorbeschriebene Verfahren qualitativ besonders hochwertige Produkte erzeugt werden. Dabei ist der erfindungsgemäß bereitgestellte Druckuntergrund sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet.

Darüber hinaus ist durch das vorbeschriebene Verfahren in besonders vorteilhafter Weise das Erzeugen eines Zwischenprodukts möglich, welches vor dem eigentlichen Bedrucken im Vergleich zu den Lösungen aus dem Stand der Technik eine deutlich verbesserte Lagerbarkeit aufweist. Im Detail lassen sich die wie vorbeschrieben hergestellten beziehungsweise behandelten Träger in einer im Vergleich zu den Lösungen aus dem Stand der Technik vegrößerten Stapelhöhe stapeln, ohne dass eine negative Beeinträchtigung des Druckuntergrunds beziehungsweise der zu bedruckenden Oberfläche mit Bezug auf eine mechanische Beeinflussung oder eine verschlechterte Bedruckbarkeit auftreten.

Ohne auf die Theorie beschränkt zu sein wird angenommen, dass eine Behandlung der getrockneten Melaminharzschicht mit UV-Strahlung trotz der sonst bekannten thermischen Härtung des Melaminharzes eine zumindest teilweise weitere Härtung der Harzschicht auslöst, beispielsweise aber nicht beschränkend durch Härtung noch vorhandener ungesättigter Gruppen, wie rein beispielhaft Carbonylgruppen, wobei die Vorteile des Verfahren nicht zwingend auf den vorbeschriebenen Effekt zurückzuführen sind.

Der gemäß Verfahrensschritt a) bereitgestellte Träger kann dabei in an sich bekannter Weise für die Herstellung von Dekorpaneelen ausgestaltet sein. In Anhängigkeit des gewünschten Einsatzbereiches der Dekorpaneele kann der Träger aus unterschiedlichen Materialen gefertigt sein. Insbesondere kann dabei das Material des Trägers in Abhängigkeit des Einsatzbereichs gewählt sein. So kann der Träger beispielsweise aus einem Holzwerkstoff bestehen beziehungsweise diesen aufweisen, sofern das Dekorpaneele keiner übermäßigen Feuchtigkeit oder Witterungsbedingungen ausgesetzt ist. Soll das Paneel hingegen z.B. in Feuchträumen oder im Außenbereich eingesetzt werden, kann der Träger beispielsweise aus einem Kunststoff bestehen oder diesen aufweisen.

Holzwerkstoffe im Sinne der Erfindung sind dabei neben Vollholzwerkstoffen auch Materialien wie z.B. Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Kunststoffe, welche bei der Herstellung entsprechender Paneele eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Beispielsweise kann ein Copolymerisat von Polyethylen und Polypropylen, beispielsweise in einem Verhältnis von 1/1 verwendet werden. Ferner kann beispielhaft ein Holz und ein Polymer geeignet sein, welches in einem Verhältnis von 40/60 bis 70/30, beispielsweise 50/50 vorliegen kann. Als Polymere Bestandteile können etwa Polypropylen, Polyethylen oder ein Copolymer aus den beiden vorgenannten Materialien verwendet werden, wobei ferner Holzmehl als Holzbestandteil Verwendung finden kann. Die Kunststoffe können grundsätzlich übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Dabei kann das vorliegende Verfahren ausgeführt werden, indem die Harzschicht gemäß Verfahrensschritt e) in einer Ausgestaltung unmittelbar aufgebracht wird auf den gemäß Verfahrensschritt a) bereitgestellten Träger. Ein Aufbringen kann dabei in an sich bekannter Weise realisiert werden durch Gießvorrichtungen oder durch das Verwenden von Auftragswalzen. Die Harzzusammensetzung kann beispielsweise mit einer Auftragsmenge zwischen ≥5 g/m² und ≤50 g/m², vorzugsweise ≥10 g/m² und ≤40 g/m² aufgetragen werden. Gemäß einer weiteren Ausgestaltung kann die Harzzusammensetzung, beispielsweise die gleiche Harzzusammensetzung, dabei auch in wenigstens zwei Auftragungsstufen aufgetragen werden.

Nach dem Auftrag der Harzzusammensetzung in Verfahrensschritt e) erfolgt gemäß Verfahrens schritt f) ein Trocknungsschritt, bei welchem zumindest die Oberfläche der harzhaltigen Lage zumindest teilweise getrocknet wird. Dazu kann es vorgesehen sein, dass auf der Oberfläche, auf welche die Harzzusammensetzung aufgetragen wurde, eine Oberflächentemperatur zwischen ≥75°C und ≤125 °C, vorzugsweise zwischen ≥80°C und ≤110 °C, insbesondere zwischen ≥90°C und ≤100 °C erzeugt wird. Zur Erzeugung einer entsprechenden Oberflächentemperatur sind beispielsweise IR-Strahler, NIR-Strahler, Düsentrockner oder vergleichbare Einrichtungen geeignet. Die genannte Oberflächentemperatur wird dabei bevorzugt für einen Zeitraum zwischen ≥1 s und ≤600 s, vorzugsweise zwischen ≥5s und ≤400s, noch bevorzugter zwischen ≥10 s und ≤300 s eingestellt.

Im Anschluss an das Trocknen gemäß Verfahrensschritt f) erfolgt bei einem vorbeschriebenen Verfahren gemäß Verfahrensschritt g) ein Anschließendes Behandeln der in Verfahrensschritt e) aufgebrachten und in Verfahrens schritt f) getrockneten Harzzusammensetzung mit UV-Strahlung.

Unter UV-Strahlung kann dabei insbesondere eine Strahlung verstanden werden eine Strahlung, die ein einem Wellenlängenbereich von beispielsweise 10-380nm, etwa 100-380nm liegt. Dabei kann derartige Strahlung beispielsweise erzeugbar sein in an sich bekannter Weise durch das Verwenden von Mitteldruckstrahlern. Beispielhaft kann eine Gasentladungslampe, wie etwa eine Quecksilberdampflampe, verwendet werden.

Eine geeignete Leistung beziehungsweise Bestrahlungsstärke der Bestrahlung insbesondere auf der Oberfläche des bestrahlten Substrats kann beispielhaft in einem Bereich von ≥ 100W/cm bis ≤ 200W/cm, bevorzugt von ≥ 110W/cm bis ≤ 170W/cm, beispielsweise von ≥ 120W/cm bis ≤ 160W/cm, etwa von 145 W/cm liegen.

Beispielsweise kann eine Strahlungsquelle oder kann eine Mehrzahl an Strahlungsquellen verwendet werden, die etwa in Transportrichtung des Trägers hintereinander angeordnet sein können. In einem beispielhaften Wellenlängenbereich von 230 - 410 nm und der Verwendung von drei hintereinander geschalteten Strahlern, beispielhaft mit einer Leistung von jeweils 145W/cm, kann die Gesamtdosis beispielsweise eingestellt werden auf einen Bereich von ≥ 400 mJ/cm² bis ≤ 1200 mJ/cm², insbesondere ≥ 600 mJ/cm² bis ≤ 1000 mJ/cm², etwa von ≥ 700 mJ/cm² bis ≤ 900 mJ/cm², beispielhaft von 830 mJ/cm².

Hierzu kann beispielsweise bei der Verwendung von drei hintereinander geschalteten UV-Strahlern eine Aufenthaltszeit im direkten Fokus des Strahlers, der einen Bereich entsprechend der Bewegungsrichtung des Trägers von ungefähr 10 mm aufweisen kann, von beispielhaft ungefähr 0,024 s betragen, wobei die Aufenthaltszeit in einem erweiterten Fokus, der einen Bereich entsprechend der Bewegungsrichtung des Trägers von ungefähr 50 mm aufweisen kann, von etwa 0,12 s betragen.

Grundsätzlich können Gesamtbestrahlungsdauern, welche sowohl den direkten Fokus als auch den erweiterten Fokus umfassen können, in einem Bereich von ≥ 0,05s bis ≤ 20s, bevorzugt ≥ 0,1 s bis ≤ 2 s vorliegen, etwa ≥ 0,2 s bis ≤ 0,5 s liegen. Zum Erreichen der vorgenannten Werte kann beispielsweise eine Geschwindigkeit des Trägers in einem Bereich von beispielhaft 25m/min eingestellt werden.

Die so behandelte Platte beziehungsweise der Träger mit dem aufgebrachten Druckuntergrund kann anschließend unmittelbar bedruckt werden, insbesondere unter Verwendung von Flexo-Druck, Offset-Druck oder Siebdruckverfahren, als auch insbesondere mittels Digitaldrucktechniken, wie beispielsweise Inkjet-Verfahren oder Laserdruck-Verfahren. Alternativ kann der Träger samt Druckuntergrund als Zwischenprodukt beziehungsweise als Halbzeug gelagert werden und zu einem späteren Zeitpunkt der Lagerung entnommen und bedruckt werden.

Alternativ zu dem vorbeschriebenen unmittelbaren Bedrucken des Trägers beziehungsweise Aufbringen des Druckuntergrunds unmittelbar auf den Träger kann es ferner vorgesehen sein, dass eine Papier- oder Vliesschicht mit dem Druckuntergrund versehen und anschließend bedruckt wird. In diesem Fall wird in Anschluss an den Verfahrensschritt a) gemäß Verfahrensschritt b) eine Harzschicht auf den plattenförmigen Träger aufgebracht, die als Klebstoff zum Fixieren der Papier- oder Vliesschicht dienen kann. Dabei kann in diesem Verfahrensschritt eine an sich bekannte Harzzusammensetzung Verwendung finden. Ferner kann dieser Verfahrensschritt wiederum Anwendung finden durch das Verwenden von Auftragswalzen.

Anschließend wird gemäß Verfahrensschritt c) die Papier- oder Vliesschicht auf den plattenförmigen Träger beziehungsweise auf die Harzschicht aufgebracht, woraufhin sich gemäß Verfahrensschritt d) ein Kalandrieren des entstandenen Schichtenaufbaus, insbesondere bei einer Temperatur zwischen ≥ 40° und ≤ 250°C, anschließt. Dieser Schritt kann dabei in an sich grundsätzlich bekannter Weise erfolgen durch das Verfahren des Schichtaufbaus durch einen Kalanderwalzen aufweisenden Kalander, welcher den Schichtaufbau mit Druck und/oder Wärme behandelt.

Für den Fall, dass das Verfahren somit das Aufbringen eines Papiers oder Vlieses und damit etwa die Verfahrensschritte b) bis d) aufweist, erfolgt das Aufbringen einer melaminharzhaltigen Harzzusammensetzung beziehungsweise wenigstens einer harzhaltigen beziehungswese melaminharzhaltigen Lage gemäß Verfahrensschritt e) im Anschluss an das Kalandrieren gemäß Verfahrensschritt c).

In dem erfindungsgemäßen Verfahren kann sowohl der Auftrag einer Harzzusammensetzung auf den plattenförmigen Träger gemäß Verfahrensschritt b), als auch der Auftrag einer Harzzusammensetzung auf den plattenförmigen Träger gemäß Verfahrens schritt e), als auch der Auftrag einer Harzzusammensetzung auf das auf den plattenförmigen Träger aufgebrachte Papier oder Vlies nach dem Kalandrieren mittels Auftragswalzen, einer Sprüheinrichtung, Rakeln, Blade-Coating, Luftbürsten, Gussstricheinrichtungen, Schlitzdüsen, Gießvorhang oder anderer geeigneter Vorrichtungen erfolgen.

In einer bevorzugten Ausgestaltung kann in Verfahrensschritt e) ein sukzessives zweifaches Auftragen jeweils einer Harzzusammensetzung unter Ausbildung zweier harzhaltiger Lagen erfolgen unter Verwendung der Verfahrensschritte:
e1): Ausbilden einer ersten harzhaltigen Lage unter Verwendung einer Harzzusammensetzung mit einem Gemisch aus Melaminharz und Harnstoffharz; und
e2): Ausbilden einer zweiten harzhaltigen Lage unter Verwendung einer Harzzusammensetzung mit einem Anteil von Melaminharz im Harzanteil, der in einem Bereich von ≥ 95Gew.-%, insbesondere ≥ 99Gew.-% liegt.

In überraschender Weise hat sich gezeigt, dass die vorgenannten Vorteile insbesondere mit einer zweilagigen Harzschicht beziehungsweise mit zwei harzhaltigen Lagen ermöglicht werden können. Dabei konnte insbesondere gefunden werden, dass das sukzessive Aufbringen einer ersten harzhaltigen Lage aufweisend eine Mischung aus Melaminharz und Harnstoffharz und einer zweiten, auf der ersten harzhaltigen Lage angeordneten harzhaltigen Lage mit einem Harzanteil in einem Bereich von ≥ 95Gew.-%, insbesondere ≥ 99Gew.-%, beispielsweise zu 100%, Melaminharz vorliegt, die vorbeschriebenen Vorteile besonders stark ausprägt. Insbesondere kann die zweite aufgebrachte harzhaltige Lage, welche gemäß Verfahrensschritt e2) aufgetragen wird, dabei harnstoffharzfrei sein.

Die jeweilige Harzzusammensetzung kann dabei grundsätzlich beispielsweise einen Harzanteil zwischen ≥15 Gew.-% und ≤95 Gew.-%, vorzugsweise zwischen ≥20 Gew.-% und ≤90 Gew.-%, noch bevorzugter zwischen ≥25 Gew.-% und ≤65 Gew.-% aufweisen.

Dabei kann die erste harzhaltige Lage in Verfahrens schritt e1) aufgetragen werden mit einer Mischung, welche ausschließlich Melaminharz und Harnstoffharz im Harzanteil aufweist. Dabei kann Melaminharz in dem Harzanteil beispielsweise in einem Anteil vorliegen, der in einem Bereich von ≥ 55Gew.-% bis ≤ 90 Gew.-%, beispielsweise ≥ 60Gew.-% bis ≤ 80 Gew.-%, etwa 70Gew.-%, liegt, wobei der restliche Anteil des Harzanteils jeweils von Harnstoffharz gebildet sein kann.

Die vorbeschriebenen Vorteile können dabei in einer bevorzugten Ausgestaltung besonders stark ausgeprägt sein, wenn die erste harzhaltige Lage gemäß Verfahrensschritt e1) mit einer Menge aufgetragen ist, die kleiner ist, als die Menge der aufgetragenen zweiten harzhaltigen Lage gemäß Verfahrensschritt e2). Beispielsweise kann die erste harzhaltige Lage in Verfahrensschritt e1) mit einer Menge in einem Bereich von ≥10 g/m² bis ≤25g/m², beispielsweise in einem Bereich von ≥15 g/m² bis ≤20g/m², aufgetragen werden, und kann die zweite harzhaltige Lage in Verfahrensschritt e2) mit einer Menge in einem Bereich von ≥20 g/m² bis ≤40 g/m², beispielsweise in einem Bereich von ≥25 g/m² bis ≤ 35 g/m², aufgetragen werden.

In einer weiteren bevorzugten Ausgestaltung kann zumindest eine in Verfahrensschritt e) aufgebrachte Harzzusammensetzung zwischen ≥0,5 Gew.-% und ≤85 Gew.-%, vorzugsweise zwischen ≥1,0 Gew.-% und ≤80 Gew.-% eines Feststoffes mit einem mittleren Korndurchmesser d₅₀ zwischen ≥0,1 µm und ≤120 µm aufweisen. Für den Fall des Vorsehens zweier harzhaltiger Lagen können dabei beide Lagen, die erste Lage oder besonders bevorzugt die zweite, also äußere, harzhaltige Lage einen entsprechenden Feststoff aufweisen. Überraschender Weise hat sich gezeigt, dass die Aufbringung eines Druckuntergrundes mit einem entsprechenden Feststoffanteil, insbesondere aber nicht ausschließlich nach dem Aufkalandrieren einer unbedruckten Papier- oder Vliesschicht, geeignet ist, ein für einen anschließenden Direktdruck hervorragend geeignete Oberfläche bereitzustellen, welche darüber hinaus eine sehr gute Haftung zu einer anschließend aufgebrachten Deck- oder Verschleißschicht aufweist, so dass ein unter Anwendung des erfindungsgemäßen Verfahrens hergestelltes Laminat eine hohe Stabilität aufweist. Der angegebene Feststoffanteil der Harzzusammensetzung bezieht sich dabei auf die flüssige Harzzusammensetzung. Erfindungsgemäß kann es dabei insbesondere bei einem Aufbringen einer Papier- oder Vliesschicht vorgesehen sein, dass die nach dem Kalandrieren aufgetragene Harzzusammensetzung die aufgebrachte Papier- oder Vliesschicht zumindest teilweise soweit penetriert, dass die Harzzusammensetzung bis auf den plattenförmigen Träger bzw. die auf diesen aufgebrachte Harzschicht durchschlägt. Darüber hat sich überraschender Weise gezeigt, dass mittels eines solchen Herstellungsverfahrens auf die Aufbringung eines Gegenzugs zur Vermeidung des Schüsseln der Dekorplatte verzichtet werden. Dies führt zu deutlichen ökonomischen Vorteilen, da zum einen auf den entsprechenden Arbeitsschritt verzichtet werden kann, zum anderen entsprechende Materialeinsparungen resultieren.

Dabei kann es bevorzugt sein, dass in Verfahrensschritt e) eine Harzzusammensetzung aufgebracht wird, welche als Feststoff wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulosefasern oder Mischungen dieser aufweist. Durch die Verwendung solcher Feststoffe kann insbesondere ein farbiger Druckuntergrund bereitgestellt werden, dessen Farbgebung eine den Dekordruck unterstützende Eigenschaft aufweist. So kann beispielsweise bei einer Dekorgestaltung, welche eine dunkle Holzart repräsentieren soll ein Druckuntergrund mit einem braunen oder bräunlichen Grundton aufgebracht werden, während bei einer Dekorgestaltung, welche eine helle Holzart oder einen hellen Stein repräsentieren soll ein Druckuntergrund mit einem gelben oder weißen Grundton aufgebracht werden. Die Verwendung von Zellulosefasern in der auf den plattenförmigen Träger aufgebrachten Harzzusammensetzung zeigt dabei insbesondere den vorteilhaften Effekt, dass etwaige Unregelmäßigkeiten auf der Trägerplattenoberfläche, auf welchen die Harzzusammensetzung aufgebracht wird, nicht mehr auf die später zu bedruckende Oberfläche durchschlagen, was zu einer deutlichen Verbesserung des Druckbildes führt. Solche Unregelmäßigkeiten können beispielsweise Schleifrillen von Schleifen der Trägerplatten oder Abdrücke durch Fördermittel, wie z.B. Transportbänder etc, sein. Bei der Verwendung von Zellulosefasern haben diese bevorzugt eine Korngröße im Bereich zwischen ≥10µm und ≤100µm, insbesondere zwischen ≥25µm und ≤90µm. Der Anteil der Zellulosefaser an dem in der Harzzusammensetzung enthaltenen Feststoff kann dabei beispielsweise in einem Bereich zwischen ≥0 Gew.-% und ≤100 Gew.-%., vorzugsweise zwischen ≥40 Gew.-% und ≤100 Gew.-%., insbesondere zwischen ≥60 Gew.-% und ≤100 Gew.-%. liegen. Dabei bewegt sich der bevorzugte Anteil an Feststoff in der Harzzusammensetzung bei der Verwendung von Zellulosefasern am unteren Ende des Gew.-% Bereichs, bevorzugt zwischen 0,5 Gew.-% und 3,5 Gew.-%, insbesondere zwischen 1,0 Gew.-% und 2,5 Gew.-%, wohingegen der bevorzugte Anteil an Feststoff in der Harzzusammensetzung bei den weiteren als beispielsweise geeignet aufgeführten Feststoffen bevorzugt zwischen ≥5 Gew.-% und ≤ 85 Gew.-%, vorzugsweise zwischen ≥10 Gew.-% und ≤ 80 Gew.-%, noch bevorzugter zwischen ≥35 Gew.-% und ≤ 75 Gew.-% liegt. Dies liegt insbesondere in dem geringen spezifischen Gewicht der als Feststoff zusetzbaren Zellulosefasern im Vergleich zu dem spezifischen Gewicht der weiteren aufgeführten Feststoffe begründet.

Insbesondere kann es dabei erfindungsgemäß vorgesehen sein, dass in Verfahrensschritt e) eine Harzzusammensetzung aufgebracht wird, welche wenigstens ein organisches oder anorganisches Pigment ausgewählt aus der Gruppe bestehend aus Berlinerblau, Brillantgelb, Cadmiumgelb, Cadmiumrot, Chromoxidgrün, Cobaltblau, Cobaltcölinblau, Cobaltviolett, Irgazinrot, Eisenoxidschwarz, Manganviolett, Phthalocyaninblau, Terra di Siena, Titanweiß, Ultramarinblau, Ultramarinrot, Umbra, Kaolin, Zirkonium-Silicat-Pigmente, Monoazogelb und Monoazoorange, Thioindigo, beta-Naphthol-Pigmente, Naphthol AS-Pigmente, Pyrazolon-Pigmente, N-Acetessigsäureanilid-Pigmente, Azometallkomplex-Pigmente, Diaryl-Gelb-Pigmente, Chinacridon-Pigmente, Diketopyrrolo-pymol-Pigmente (DPP), Dioxazin-Pigmente, Perylen-Pigmente, Isoindolinon-Pigmente, Kupfer-Phthalocyanin-Pigmente und Mischungen dieser aufweist.

Desweiteren kann es in einer Ausgestaltung des Verfahrens vorgesehen sein, dass in Verfahrens schritt e) eine Harzzusammensetzung aufgebracht wird, welche einen Härter aufweist, wobei der Härter in der Harzzusammensetzung beispielsweise in einer Konzentration zwischen ≥0,05 Gew.-% und ≤3,0 Gew.-%, vorzugsweise ≥0,15 Gew.-% und ≤2,0 Gew.-%, noch bevorzugter zwischen ≥0,5 Gew.-% und ≤2,0 Gew.-% enthalten ist. Das Vorsehen eines Härters in der Harzzusammensetzung erlaubt es, das Abbinde- bzw. Aushärteverhalten der Harzzusammensetzung in Abhängigkeit zum auf den plattenförmigen Träger aufgebrachten Papier zu optimieren und/oder ferner eine besonders schnelle Bereitstellung des Druckuntergrunds bereitzustellen, was insbesondere dann von Vorteil sein kann, wenn sich unmittelbar an das Aufbringen des Druckuntergrunds ein Bedrucken anschließt.

Gemäß einer Ausgestaltung des Verfahrens kann der Härter dabei beispielsweise eine Lösung organischer Salze aufweisen. Bevorzugt weist der Härter dabei einen sauren pH-Wert, vorzugsweise zwischen ≥ pH 0,5 und < pH 7, vorzugsweise > pH 0,5 und ≤ pH 6 auf.

In einer besonders bevorzugten Ausgestaltung der Erfindung wird als Härter ein sogenannter latenter Härter eingesetzt. Latente Härter zeichnen sich dadurch aus, dass nach ihrem Zusatz zum Harz einerseits eine ausreichende Verarbeitungszeit bei Zimmertemperatur, andererseits eine möglichst kurze Härtungszeit bei den anschließenden Verarbeitungstemperaturen erzielt wird. Die Wirkung der latenten Härter beruht darauf, dass sie bei gewöhnlicher Temperatur unwirksam sind und erst bei erhöhter Wärme oder aufgrund einer chemischen Reaktion eine Säure freisetzen, die den Härtungsvorgang beschleunigt. Beispiele für latente Härter sind unter anderem Alkyl- oder Alkanolaminsalze der schwefeligen Säure, Amidosulfonsäure, 3-Chlor-1,2-propandiol, p-Toluolsulfonsäure, Morpholin, Ammoniumsulfat, Ammoniumchlorid, Ammoniumsulfit, Ammoniumnitrat, Ethanolaminhydrochlorid, Dimethylethanolammoniumsulfit, Diethanolammoniumsulfamat oder Maleinsäure.

Insbesondere kann es sich bei dem Härter um eine wässrige, bevorzugt nichtionogene Lösung handeln. Ein Beispiel für einen geeigneten Härter ist MH-180 B (Melatec AG, Schweiz).

Gemäß einer bevorzugten Ausgestaltung des Verfahrens kann es insbesondere vorgesehen sein, dass in Verfahrensschritt e) eine Harzzusammensetzung mit einer Viskosität aufgetragen wird, die einer Auslaufzeit zwischen ≥7 s und ≤60 s aus einem Normauslaufbecher entspricht. Die Viskosität ist bei gemäß DIN 53211 mittels eines Auslaufbechers mit einer Auslaufdüsenweite von 4mm bestimmt.

Wenigstens eine, beispielsweise sämtliche in Verfahrensschritt e) aufgebrachte Harzzusammensetzungen können neben den zuvor genannten Bestandteilen weiter Bestandteile bzw. Additive wie beispielsweise Rheologiemittel zur Einstellung der Viskosität, Wasser, Fließverbesserer, Konservierungsmittel, Tenside, Schaumverhinderer oder dergleichen enthalten.

Gemäß einer weiter bevorzugten Ausgestaltung des Verfahrens wird vor dem Aufbringen der Harzschicht in Schritt b) ein Härter auf den plattenförmigen Träger aufgebracht. Dabei wird weiter bevorzugt ein saurer Härter, beispielsweise mit einem pH-Wert zwischen ≥ pH 0,5 und < pH 7, bevorzugt > pH 0,5 und ≤ pH 6 auf den plattenförmigen Träger aufgebracht. Der Härter ist reaktive gegenüber bzw. nimmt Einfluss auf die Aushärtungsreaktion der im Anschluss aufzubringenden Harzzusammensetzung, mit welcher eine Papier- oder Vliesschicht auf dem plattenförmigen Träger befestigt werden soll.

Weiter kann es vorgesehen sein, dass nach dem Auftrag des Härters vor dem Aufbringen der Harzschicht in Schritt b) auf den plattenförmigen Träger eine Wärmebehandlung erfolgt, durch welcher die Temperatur der Oberfläche des plattenförmigen Trägers erhöht wird, vorzugsweise auf eine Temperatur zwischen ≥35°C und ≤90°C. Eine solche Wärmebehandlung kann beispielsweise mittel IR-Strahlern oder auch NIR-Strahlern (Nah-Infrarot) erfolgen.

Zur Aufbringung der Harzschicht in Schritt b) kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥5 g/m² und ≤50 g/m², vorzugsweise ≥10 g/m² und ≤40 g/m² aufgetragen werden. Besonders bevorzugt wird die Auftragsmenge der Harzzusammensetzung dabei so gewählt, dass das im anschließenden Schritt c) aufgebrachte Papier oder Vlies nicht vollständig mit der Harzzusammensetzung durchtränkt wird. Dazu kann es beispielsweise auch vorgesehen sein, dass die Harzzusammensetzung in Schritt b) mit einer kinematischen Viskosität, die einer Auslaufzeit zwischen ≥ 10 s und ≤ 40s aus einem Norm-Auslaufbecher (gemessen gemäß DIN 53211) entspricht, aufgetragen wird.

Gemäß einer weiteren Ausgestaltung des Verfahrens wird in Schritt c) ein Papier oder Vlies mit einer Grammatur zwischen ≥30 g/m² und ≤80 g/m², vorzugsweise zwischen ≥40 g/m² und ≤70 g/m² auf den plattenförmigen Träger aufgebracht. Dies kann beispielsweise über geeignete Zuführwalzen realisierbar sein, welche das Papier oder Vlies derart führen, dass es auf dem Träger angeordnet wird.

Gemäß einer Ausgestaltung des Verfahrens wird auf der der Dekorseite gegenüberliegenden Seite ein Gegenzug aufgebracht. Dabei ist es insbesondere bevorzugt, dass der Gegenzug in einem gemeinsamen Kalandrierschritt mit den Papier oder Vlies auf der Dekorseite aufgebracht wird.

In einer weiteren Ausgestaltung der Erfindung kann es vorgesehen sein, dass ein Gegenzug erst nach dem Aufbringen des Dekorbildes auf die der Dekorschicht gegenüberliegenden Seite des plattenförmigen Trägers aufgebracht wird. Dabei kann es insbesondere vorgesehen sein, dass der Gegenzug in einem gemeinsamen Arbeitsschritt mit der Aufbringung eines Overlays als Deck- und/oder Verschleißschicht aufgebracht wird.

Insbesondere ist es jedoch im Rahmen der Erfindung bevorzugt, wenn auf das Aufbringen eines Gegenzuges verzichtet wird. Es hat sich nämlich überraschender Weise gezeigt, dass mittels eines solchen Herstellungsverfahrens auf die Aufbringung eines Gegenzugs verzichtet werden kann, ohne dass ein Schüsseln der Dekorplatte auftritt. Dies führt zu deutlichen ökonomischen Vorteilen, da zum einen auf den entsprechenden Arbeitsschritt verzichtet werden kann, zum anderen entsprechende Materialeinsparungen resultieren.

Nach der Aufbringung des Druckuntergrundes auf die Dekorseite kann eine Dekorschicht gemäß Verfahrensschritt h) mittels geeigneter Druckverfahren auf den Druckuntergrund aufgebracht werden, wobei Flexo-Druck, Offset-Druck oder Siebdruckverfahren, als auch insbesondere Digitaldrucktechniken, wie beispielsweise Inkjet-Velfahren oder Laserdruck-Verfahren geeignet sind.

Bevorzugt wird zur Aufbringung der Dekorschicht mittels Direktdruckverfahren eine strahlungshärtbare Farbe und/oder Tinte eingesetzt. Strahlungshärtbar bedeutet dabei im Sinne der Erfindung, dass die Farbe und/oder Tinte mit elektromagnetischer Strahlung, wie z.B. UV-Strahlung oder Elektronenstrahlung gehärtet wird. Dabei kann es insbesondere vorgesehen sein, dass die Farbe und/oder Tinte entsprechende strahlungs- bzw. photoinduziert polymerisierende Bestandteile aufweist. Beispiele für geeignete Bestandteile sind Acrylate, Epoxide oder cyclische Amine, wie z.B. Ethylenimin.

Zum Schutz der aufgebrachten Dekorschicht kann gemäß dem weiteren Verfahrensschritt i) eine Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Insbesondere bei dem Aufbringen einer Verschleiß- oder Deckschicht bietet sich ein weiterer Vorteil der vorbeschriebenen Herstellung des Druckuntergrunds. Im Detail kann die Haftung der Verschleiß- oder Deckschicht an dem bedruckten Druckuntergrund deutlich verbessert werden, so dass eine besonders gute Stabilität und Langlebigkeit ermöglicht und ferner ein Abplatzen bei einem Pressen zum Einbringen einer Struktur, wie dies nachfolgend beschrieben ist, insbesondere in einer Kurztaktpresse (KT-Presse), verhindert werden kann.

Bezüglich der der Verschleiß- oder Deckschicht kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Verschleißschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Verschleißschichtzusammensetzung eine stabile Dispersion ausbildet und eine Entmischung bzw. ein Absetzten des Hartstoffes in der Verschleißschichtzusammensetzung vermieden werden kann. Zur Ausbildung einer entsprechenden Verschleißschicht ist es in einer Ausgestaltung der Erfindung vorgesehen, dass die Hartstoff enthaltende und strahlungshärtbare Zusammensetzung in einer Konzentration zwischen 10 g/m² und 300 g/m², vorzugsweise zwischen 50 g/m² und 250g/m² aufgetragen wird. Dabei kann die Auftragung beispielsweise mittels Walzen, wie Gummiwalzen oder mittels Gießvoruchtungen aufgetragen werden. In einer weiteren Ausgestaltung der Erfindung kann es vorgesehen sein, dass der Hartstoff zum Zeitpunkt des Auftrages der Verschleißschichtzusammensetzung nicht in der Zusammensetzung enthalten ist, sondern als Partikel auf die aufgetragenen Verschleißschichtzusammensetzung aufgestreut wird und diese im Anschluss gehärtet wird.

Desweiteren kann es vorgesehen, dass in die Verschleiß- oder Deckschicht eine mit dem Dekor übereinstimmende Oberflächenstrukturierung eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt.

Gemäß einer weiteren Ausgestaltung der Erfindung ist es vorgesehen, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalz oder eines Stempels beziehungsweise einer Presse, wie etwa einer Kurztaktpresse, eine gewünschte Oberflächenstruktur eingeprägt. Dabei erfolgt die Prägung bevorzugt in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Darüber hinaus kann es vorgesehen sein, dass die Verschleiß- und/oder Deckschicht als strahlungshärtebare oder zumindest teilweise strahlungshärtebare Zusammensetzung, beispielsweise auf Basis einen Acrylat-Lackes, eines Epoxid-Lackes, oder eines Urethanacrylates aufgetragen wird. Dabei kann es insbesondere bevorzugt sein, dass die Zusammensetzung nach dem Auftrag auf die Dekorschicht in einem ersten Schritt strahlungsinduziert nur teilweise gehärtet wird und in teilgehärtete Schicht in der zuvor beschriebenen Weise eine mit dem Dekor übereinstimmende Oberflächenstrukturierung eingebracht wird.

Gemäß einer weiteren Ausgestaltung der Erfindung kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

In einer weiteren Ausgestaltung des erfindungsgemäßen Verfahrens kann es vorgesehen sein, dass die Strukturierung im Zuge des Druckverfahrens erzeugt wird. Hierzu kann es beispielsweise vorgesehen sein, dass ein mehrfacher Farbauftrag in der Weise erfolgt, dass über den Druckuntergrund erhabene Bereiche entstehen, welche eine gewünschte dreidimensionale Struktur ergeben. Auf die so erzeugte Struktur kann dann eine Verschleiß- und/oder Deckschicht aufgebracht werden.

Darüber hinaus wird mit der vorliegenden Erfindung ein direkt bedrucktes Dekorpaneel vorgeschlagen, aufweisend einen plattenförmigen Träger, gegebenenfalls eine auf den plattenförmigen Träger aufgebrachte Harzschicht und gegebenenfalls eine Schicht aus einen nicht imprägnierten und unbedruckten Papier oder Vlies, wobei das Dekorpaneel ferner aufweist einen auf den Träger oder auf die Papier- oder Vliesschicht aufgebrachten Druckuntergrund, eine auf den Druckuntergrund aufgebrachte Farbschicht und eine zumindest auf die Farbschicht aufgebrachte Deck- und/oder Verschleißschicht, wobei das bedruckte Paneel dadurch gekennzeichnet ist, der Druckuntergrund aus zwei harzhaltigen Lagen ausgestaltet ist, wobei die erste harzhaltige Lage ein Gemisch aus Melaminharz und Harnstoffharz aufweist und wobei die zweite, insbesondere auf beziehungsweise auf der dem Träger abgewandten Seite der ersten harzhaltigen Lage angeordnete, harzhaltige Lage im Harzanteil zu ≥ 95 Gew.-%, insbesondere zu ≥ 99 Gew.-%, beispielsweise zu 100%, Melaminharz aufweist.

Dabei kann das Paneel gegebenenfalls eine bedruckte Papier- oder Vliesschicht aufweisen, auf welcher der Druckuntergrund aufgebracht ist, oder kann der Druckuntergrund unmittelbar auf dem Träger aufgebracht sein. Insbesondere ein derartiges direkt bedrucktes Paneel kann die mit Bezug auf das Verfahren beschriebenen Vorteile einer verbesserten Herstellbarkeit aufweisen, wobei bezüglich der detaillierten Vorteile und Merkmal auf die vorbeschriebenen Ausführungen zu dem Verfahren verwiesen wird.

Dabei kann ein derartiges Paneel beispielsweise ferner den Vorteil bieten, dass ein besonders vorteilhaft lagerbares Halbzeug beziehungsweise ein Zwischenprodukt ermöglicht werden kann, welches mit einem Druckuntergrund versehen ist, jedoch noch nicht bedruckt ist und entsprechend auch keine Verschleiß-oder Deckschicht aufweist. Ein derartiges Halbzeug kann dabei aufweisen einen plattenförmigen Träger, gegebenenfalls eine auf den plattenförmigen Träger aufgebrachte Harzschicht und gegebenenfalls eine Schicht aus einem nicht imprägnierten und unbedruckten Papier oder Vlies, wobei das Halbzeug ferner aufweist einen auf den Träger oder auf die Papier- oder Vliesschicht aufgebrachten Druckuntergrund, wobei der Druckuntergrund aus zwei harzhaltigen Lagen ausgestaltet ist, wobei die erste harzhaltige Lage ein Gemisch aus Melaminharz und Harnstoffharz aufweist und wobei die zweite, insbesondere auf beziehungsweise auf der dem Träger abgewandten Seite der ersten harzhaltigen Lage angeordnete, harzhaltige Lage im Harzanteil zu ≥ 95 Gew.-%, insbesondere zu ≥ 99 Gew.-%, beispielsweise zu 100%, Melaminharz aufweist.

In einer bevorzugten Ausgestaltung kann der Druckuntergrund aus zumindest einer Harzzusammensetzung gebildet sein, die zwischen ≥ 0,5 Gew.-% und ≤ 85 Gew.-%, vorzugsweise zwischen ≥1,0 Gew.-% und ≤80 Gew.-% eines Feststoffes mit einem mittleren Korndurchmesser d₅₀ zwischen ≥0,1µm und ≤120µm aufweist.

In einer weiteren bevorzugten Ausgestaltung des erfindungsgemäßen Dekorpaneels weist dieses auf der der bedruckten Seite gegenüberliegenden Seite des plattenförmigen Trägers einen Gegenzug auf. Es kann jedoch weiter bevorzugt sein, dass auf der der bedruckten Seite gegenüberliegenden Seite des plattenförmigen Trägers kein Gegenzug vorgesehen ist. Ein solches gegenzugfreies Paneel ist durch die Material- und Arbeitsschrittersparnis insbesondere kostengünstiger herstellbar und bietet somit neben ökologischen Vorteilen der Ressourcenschonung auch ökonomische Vorteile.

Gemäß einer weiteren Ausgestaltung der Erfindung kann der plattenförmige Träger zumindest in einem Randbereich eine Profilierung aufweisen. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder Ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

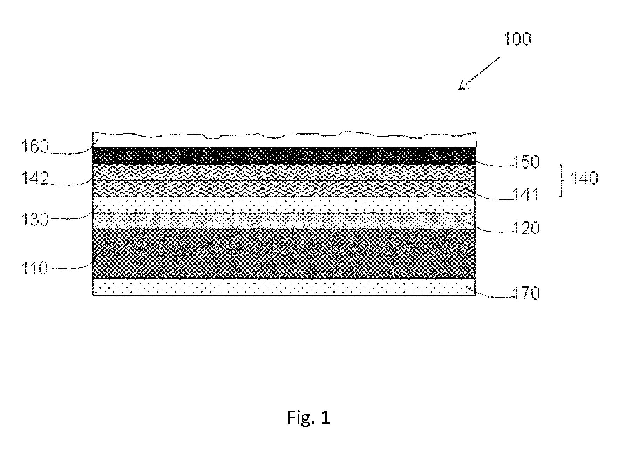

Fig. 1 zeigt den schematischen Aufbau einer Ausgestaltung eines Dekorpaneels gemäß der Erfindung.

Fig. 1 zeigt den schematischen Aufbau einer Ausgestaltung eines Dekorpaneels 100 gemäß der Erfindung. Auf einen plattenförmigen Träger 110, auf welchen zunächst ein Härter (hier nicht sichtbar) aufgebracht werden kann, ist eine Harzschicht 120 angeordnet, mit welcher eine Papier- oder Vliesschicht 130 auf dem plattenförmigen Träger 110 befestigbar ist. Auf die Papier- oder Vliesschicht 130 ist ein Druckuntergrund 140 aufgebracht.

Insbeosndere kann der Druckuntergrund 140 aus zwei harzhaltigen Lagen 141, 142 aufgebaut sein, wobei die erste beziehungsweise untere harzhaltige Lage 141 ein Gemisch aus Melaminharz und Harnstoffharz aufweist und wobei die zweite beziehungsweise obere harzhaltige Lage 142 im Harzanteil zu ≥ 95 Gew.-% Melaminharz aufweist.

Beispielsweise kann die erste harzhaltige Lage 141 mit einer Menge in einem Bereich von ≥10 g/m² bis ≤25g/m² aufgetragen sein, und kann die zweite harzhaltige Lage 142 mit einer Menge in einem Bereich von ≥20 g/m² bis ≤ 40 g/m² aufgetragen sein.

Beispielsweise wird der Druckuntergrund 140 aus wenigstens einer Harzzusammensetzung, welche in der ersten harzhaltigen Lage 141 und/oder in der zweiten harzhaltigen Lage 142 vorliegen kann, gebildet, welche zwischen ≥0,5 Gew.-% und ≤85 Gew.-%, vorzugsweise zwischen ≥1,5 Gew.-% und ≤80 Gew.-% eines Feststoffes mit einem mittleren Korndurchmesser d₅₀ zwischen ≥0,1µm und ≤120µm aufweist. Als Feststoff kann dabei wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulosefasern oder Mischungen dieser in der Harzzusammensetzung enthalten sein. Besonders bevorzugt enthält die Harzzusammensetzung zumindest Titandioxid oder Zellulosefasern als Feststoff.

Der Druckuntergrund 140 ist auf das erfindungsgemäße Dekorpaneel 100 gegebenenfalls erst im Anschluss an einen Kalandrierschritt aufgebracht, in welchem die Papier- oder Vliesschicht 130 unter Einwirkung von Druck und/oder Wärme auf die auf den plattenförmigen Träger 110 aufgebrachte Harzschicht 120 aufgepresst wird, oder der Druckuntergrund ist, wie dies in Figur 1 nicht gezeigt ist, unmittelbar auf den Träger 110 aufgebracht. Bei der Ausgestaltung gemäß Fig. 1 dringt die Harzzusammensetzung der Harzschicht 120 bevorzugt lediglich teilweise in die Papier- oder Vliesschicht 130 ein und penetriert diese nicht vollständig.

Auf den so hergestellten Druckuntergrund 140 ist eine Farbschicht 150 aufgebracht, welche ein Dekor ausbildet. Auf die Farbschicht 150 ist eine Deck- und/oder Verschleißschicht 160 aufgebracht. Dabei kann die Deck- und/oder Verschleißschicht haptisch wahrnehmbare Strukturen aufweisen, welche bevorzugt mit dem durch die Farbschicht 150 ausgebildeten Dekor in der Weise übereinstimmen, dass der Eindruck eines naturähnlichen Materials entsteht. Auf der gegenüberliegenden Seite ist in der gezeigten Ausgestaltung ein Gegenzug 180 aufgebracht.

Nicht gezeigt ist ein schematischer Aufbau einer Ausgestaltung eines Dekorpaneels 100 gemäß der Erfindung, welches frei von einem Gegenzug ist.

### Bezugszeichen:

- 100: Dekorplatte
- 110: plattenförmiger Träger
- 120: Harzschicht
- 130: Papier-/Vliesschicht
- 140: Druckuntergrund
- 141: erste harzhaltige Lage
- 142: zweite harzhaltige Lage
- 150: Farbschicht
- 160: Deck-/Verschleißschicht
- 180: Gegenzug

## Patentansprüche

1. Verfahren zur Herstellung eines Druckuntergrundes (140) für den Direktdruck zum Herstellen eines Dekorpaneels, aufweisend die Verfahrensschritte:
a) Bereitstellen eines plattenförmigen Trägers (110);
b) Gegebenenfalls Aufbringen einer Harzschicht (120) auf den plattenförmigen Träger (110);
c) Gegebenenfalls Aufbringen einer Papier- oder Vliesschicht (130) auf den plattenförmigen Träger (110); und
d) Gegebenenfalls Kalandrieren des entstandenen Schichtenaufbaus, insbesondere bei einer Temperatur zwischen ≥ 40° und ≤ 250°C,
**dadurch gekennzeichnet, dass**
das Verfahren die weiteren Verfahrensschritte aufweist:
e) Aufbringen wenigstens einer Harzzusammensetzung mit einem Melaminharz;
f) Trocknen der in Verfahrens schritt e) aufgebrachten Harzzusammensetzung unter Einwirkung von Wärme; und
g) Anschließendes Behandeln der in Verfahrensschritt e) aufgebrachten und in Verfahrensschritt f) getrockneten Harzzusammensetzung mit UV-Strahlung.

2. Verfahren gemäß Anspruch 1, **dadurch gekennzeichnet, dass** in Verfahrensschritt e) ein sukzessives zweifaches Auftragen jeweils einer Harzzusammensetzung unter Ausbildung zweier harzhaltiger Lagen (141, 142) erfolgt unter Verwendung der Verfahrensschritte:
e1): Ausbilden einer ersten harzhaltigen Lage (141) unter Verwendung einer Harzzusammensetzung mit einem Gemisch aus Melaminharz und Harnstoffharz; und
e2): Ausbilden einer zweiten harzhaltigen Lage (142) unter Verwendung einer Harzzusammensetzung mit einem Anteil von Melaminharz im Harzanteil, der in einem Bereich von ≥ 95Gew.-%, insbesondere ≥ 99Gew.-% liegt.

3. Verfahren gemäß Anspruch 2, **dadurch gekennzeichnet, dass** die erste harzhaltige Lage (141) in Verfahrensschritt e1) mit einer Menge in einem Bereich von ≥10 g/m² bis ≤25g/m² aufgetragen wird, und dass die zweite harzhaltige Lage (142) in Verfahrensschritt e2) mit einer Menge in einem Bereich von ≥20 g/m² bis ≤ 40 g/m² aufgetragen wird.

4. Verfahren gemäß einem der vorhergehenden Ansprüche, **dadurch gekennzeichnet, dass** zumindest eine in Verfahrensschritt e) aufgebrachte Harzzusammensetzung zwischen ≥0,5 Gew.-% und ≤85 Gew.-%, vorzugsweise zwischen ≥1,0 Gew.-% und ≤80 Gew.-% eines Feststoffes mit einem mittleren Korndurchmesser d₅₀ zwischen ≥0,1 µm und ≤120 µm aufweist.

5. Verfahren gemäß Anspruch 4, **dadurch gekennzeichnet, dass** in Verfahrensschritt e) zumindest eine Harzzusammensetzung aufgebracht wird, welche als Feststoff wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulose oder Mischungen dieser aufweist.

6. Verfahren gemäß einem der vorhergehenden Ansprüche, **dadurch gekennzeichnet, dass** in Verfahrensschritt e) zumindest eine Harzzusammensetzung aufgebracht wird, welche einen Harzanteil zwischen ≥15 Gew.-% und ≤ 95 Gew.-%, vorzugsweise zwischen ≥20 Gew.-% und ≤ 90 Gew.-% aufweist.

7. Verfahren gemäß einem der vorhergehenden Ansprüche, **dadurch gekennzeichnet, dass** in Verfahrensschritt e) zumindest eine Harzzusammensetzung aufgebracht wird, welche einen Härter aufweist, wobei der Härter in der Harzzusammensetzung in einer Konzentration zwischen ≥0,05 Gew.-% und Gew.-%, vorzugsweise ≥0,15 Gew.-% und ≤1,0 Gew.-% enthalten ist.

8. Verfahren gemäß einem der vorhergehenden Ansprüche, **dadurch gekennzeichnet, dass** vor dem Aufbringen einer Harzschicht (120) auf den plattenförmigen Träger (110) in Schritt b) ein Härter auf den plattenförmigen Träger (110) aufgebracht wird.

9. Verfahren gemäß Anspruch 8, **dadurch gekennzeichnet, dass** die mit dem Härter beaufschlagte Oberfläche des plattenförmigen Trägers (110) erwärmt wird, vorzugsweise auf eine Oberflächentemperatur zwischen ≥35°C und ≤90°C.

10. Verfahren gemäß einem der vorhergehenden Ansprüche, **dadurch gekennzeichnet, dass** in Schritt c) ein Papier oder Vlies mit einer Grammatur zwischen ≥30 g/m² und ≤80 g/m², vorzugsweise zwischen ≥40 g/m² und ≤70 g/m² auf den plattenförmigen Träger (110) aufgebracht wird.

11. Verfahren nach einem der vorhergehenden Ansprüche, weiterhin ausweisend die Verfahrensschritte:
h) Aufbringen einer Dekorschicht (150) auf den Druckuntergrund (140) mittels Direktdruck; und
i) Aufbringen einer Verschleiß- oder Deckschicht (160) auf die Dekorschicht (150).

12. Verfahren gemäß Anspruch 11, **dadurch gekennzeichnet, dass** die Dekorschicht (150) in Schritt h) mittels Flexo-Druck, Offset-Druck, Siebdruckverfahren, Inkjet-Verfahren oder Laserdruck-Verfahren aufgebracht wird.

13. Verfahren gemäß Anspruch 11 oder 12, **dadurch gekennzeichnet, dass** zur Aufbringung der Dekorschicht (150) eine strahlungshärtbare Farbe und/oder Tinte auf den Druckuntergrund (140) aufgetragen wird.

14. Direkt bedrucktes Dekorpaneel (100), aufweisend einen plattenförmigen Träger (110), gegebenenfalls eine auf den plattenförmigen Träger (110) aufgebrachte Harzschicht (120) und gegebenenfalls eine Schicht (130) aus einen nicht imprägnierten und unbedruckten Papier oder Vlies, wobei das Dekorpaneel (100) ferner aufweist einen auf den Träger (110) oder auf die Papier- oder Vliesschicht (120) aufgebrachten Druckuntergrund (140), eine auf den Druckuntergrund (140) aufgebrachte Dekorschicht (150) und eine zumindest auf die Dekorschicht (150) aufgebrachte Deck- und/oder Verschleißschicht (160), **dadurch gekennzeichnet, dass** der Druckuntergrund (140) aus zwei harzhaltigen Lagen (141, 142) ausgestaltet ist, wobei die erste harzhaltige Lage (141) ein Gemisch aus Melaminharz und Harnstoffharz aufweist und wobei die zweite harzhaltige Lage (142) im Harzanteil zu ≥ 95 Gew.-% Melaminharz aufweist.

15. Dekorpaneel (100) nach Anspruch 14, **dadurch gekennzeichnet, dass** der Druckuntergrund (140) aus zumindest einer Harzzusammensetzung gebildet ist, zwischen ≥ 0,5 Gew.-% und ≤ 85 Gew.-%, vorzugsweise zwischen ≥1,0 Gew.-% und ≤80 Gew.-% eines Feststoffes mit einem mittleren Korndurchmesser d₅₀ zwischen ≥0,1µm und ≤120µm aufweist.
